# EUROPEAN PATENT APPLICATION

(11) **EP 4 451 360 A1**
(43) Date of publication of application: **23.10.2024**
(21) Application number: 22950662.1
(22) Date of filing: 14.07.2022
(51) Int. Cl.: H01M 4/13

(54) **SECONDARY BATTERY, BATTERY MODULE, BATTERY PACK, AND ELECTRICAL DEVICE**

(71) Applicant: Contemporary Amperex Technology (Hong Kong) Limited, Central, Central And Western District (HK)
(72) Inventor: CHEN, Huiling, Ningde, Fujian 352100 (CN); HAN, Changlong, Ningde, Fujian 352100 (CN); WU, Zeli, Ningde, Fujian 352100 (CN); GUO, Jie, Ningde, Fujian 352100 (CN); JIANG, Bin, Ningde, Fujian 352100 (CN); HUANG, Lei, Ningde, Fujian 352100 (CN); ZHANG, Cuiping, Ningde, Fujian 352100 (CN)
(74) Representative: Kraus & Lederer PartGmbB
(86) International application number: PCT/CN2022/105827
(87) International publication number: WO 2024/011541

(57) **Abstract**

The present application provides a secondary battery (5), a battery module (4), a battery pack (1), and an electrical device (6). The secondary battery (5) includes a positive electrode plate including a positive electrode film layer, a negative electrode plate including a negative electrode film layer, an electrolytic solution, and a solid electrolyte; the solid electrolyte is disposed on a surface of the positive electrode film layer and/or the negative electrode film layer, the solid electrolyte includes a polymer matrix and a first additive, and the first additive is configured to form an interface film on the surface of the positive electrode film layer and/or the negative electrode film layer, where a mass percentage of the polymer matrix relative to a total mass of the solid electrolyte is denoted as A%; and a mass percentage of the first additive relative to the total mass of the solid electrolyte is denoted as B%, and the secondary battery satisfies 0.1 ≤ B/A ≤ 19. By combining the solid electrolyte and the liquid electrolyte, the present application can balance advantages of the solid electrolyte and the liquid electrolyte, and can improve dynamics performance, safety performance, and cycle performance of the secondary battery.

## Description

### TECHNICAL FIELD

The present application relates to the field of batteries, in particular to a secondary battery, a battery module, a battery pack, and an electrical device.

### BACKGROUND

Secondary batteries have characteristics of high capacity, long service life, and the like, and thus have been widely used in electronic devices, such as mobile phones, notebook computers, scooters, electric vehicles, electric airplanes, electric ships, electric toy cars, electric toy ships, electric toy planes, and electric tools. With increasingly wide use of batteries, requirements for performances of secondary batteries are increasingly stringent.

Upon improving performances of secondary batteries, however, it is difficult to simultaneously balance safety performance, cycle performance, and dynamics performance of the secondary batteries.

### SUMMARY

The present application is made in view of the foregoing task and aims to provide a secondary battery, a battery module, a battery pack, and an electrical device.

A first aspect of the present application provides a secondary battery, said secondary battery comprising a positive electrode plate including a positive electrode film layer, a negative electrode plate including a negative electrode film layer, an electrolytic solution, and a solid electrolyte; the solid electrolyte is disposed on a surface of the positive electrode film layer and/or the negative electrode film layer, the solid electrolyte includes a polymer matrix and a first additive, and the first additive is configured to form an interface film on the surface of the positive electrode film layer and/or the negative electrode film layer, where a mass percentage of the polymer matrix relative to a total mass of the solid electrolyte is denoted as A%; a mass percentage of the first additive relative to the total mass of the solid electrolyte is denoted as B%, and the secondary battery satisfies: 0.1 ≤ B/A ≤ 19; and optionally, 0.5 ≤ B/A ≤ 10.

In the present application, the polymer matrix in the solid electrolyte has certain stickiness, thereby enabling the solid electrolyte to adhere to the surface of an active material. The solid electrolyte has good thermal and chemical stability, and can maintain good cycle stability in charge and discharge processes of the secondary battery and improve cycle performance of the secondary battery. The solid electrolyte further has a wide and stable electrochemical window, which can ensure that the electrolyte is less prone to adverse interface reactions with positive and negative electrodes in the charging and discharging processes, thereby reducing internal resistance of the secondary battery, reducing heat emission, and improving safety performance and service life of the secondary battery. In addition, the interface film formed by the first additive on the surface of the active material is not too thick, which is conducive to the transport of metal ions; and the interface film has low resistance, which is conducive to improving dynamics performance of the secondary battery. By combining the solid electrolyte and the liquid electrolyte, advantages of the solid electrolyte and the liquid electrolyte can be balanced, and the dynamics performance, safety performance, and cycle performance of the secondary battery can be improved.

In any embodiment, the secondary battery satisfies: 5 ≤ A ≤ 99; and/or 0.1 ≤ B ≤ 95. When the mass percentage of the polymer matrix is within the above range, it is possible to guarantee adhesion between the polymer matrix and the active material, and the solid electrolyte is unlikely to detach from the surface of the active material in the charging and discharging processes of the secondary battery. When the mass percentage of the first additive is within the above range, it is possible to ensure that the first additive can form a uniform and stable interface film on the positive electrode film layer and/or the negative electrode film layer, and the resistance of the interface film is relatively low, which is conducive to improving the dynamics performance of the secondary battery.

In any embodiment, the first additive includes: a boron-containing lithium salt, a mass percentage of which relative to the total mass of the solid electrolyte is denoted as B1%; and a negative electrode film-forming additive, a mass percentage of which relative to the total mass of the solid electrolyte is denoted as B2%, where the secondary battery satisfies: 0.002 ≤ B 1B2 ≤ 10. When the mass percentage of the negative electrode film-forming additive of the present application is within the above range, it is possible to ensure that the negative electrode film-forming additive and the boron-containing lithium salt can jointly form a uniform and stable SEI film, which further improves the protective performance for the negative electrode active material.

In any embodiment, the secondary battery satisfies: 0.1 ≤ B1 ≤ 50; and/or 0.1 ≤ B2 ≤ 50.

In any embodiment, the boron-containing lithium salt has a molecular formula of LiBFₐO_{b}C_{c}P_{d}, where 0 ≤ a ≤ 4, 0 ≤ b ≤ 8, 0 ≤ c ≤ 4, and 0 ≤ d ≤ 4; and optionally, the boron-containing lithium salt includes one or more of lithium tetrafluoroborate LiBF₄, lithium bisoxalate borate LiBOB, and lithium difluorooxalate borate LiDFOB.

Thus, in the present application, when the lithium tetrafluoroborate LiBF₄, the lithium bisoxalate borate LiBOB, and the lithium difluorooxalate borate LiDFOB are used together, the SEI film formed by the three has many components and a more stable structure; and on the basis of ensuring the structural stability, it is possible to ensure the SEI film to have a relatively small resistance value of, thereby ensuring low-temperature performance of the secondary battery.

In any embodiment, the negative electrode film-forming additive includes one or more of a carbonate additive, a sulfate additive, and a sulfite additive. The combination of the negative electrode film-forming additive and the boron-containing lithium salt of the present application forms the SEI film on the surface of the negative electrode active material, and the formation of the SEI film on the surface by a plurality of types of components can enrich the structure of the SEI film and improve structural stability of the SEI film.

In any embodiment, the carbonate additive includes a cyclic carbonate solvent and/or a linear carbonate solvent; optionally, the cyclic carbonate solvent includes one or more of vinylidene carbonate VC, fluoroethylene carbonate FEC, difluoroethylene carbonate DFEC, vinyl ethylene carbonate VEC, and dicaprylyl carbonate CC; the linear carbonate solvent includes one or more of allyl ethyl carbonate AEC, diphenyl carbonate DPC, methyl allyl carbonate MAC, and polycarbonate VA; and/or the sulfate additive includes a cyclic sulfonate additive and/or a hydrocarbyl sulfate additive; optionally, the cyclic sulfonate additive includes one or more of 1,3-propane sultone PS, propene sultone PES, and 3-fluoro-1,3-propane sultone FPS; and/or the hydrocarbyl sulfate additive includes one or more of ethylene sulfate DTD, diethyl sulfate DES, and dimethyl sulfate DMS; and/or the sulfite additive includes ethylene sulfite ES and/or vinyl ethylene sulfite VES.

In any embodiment, the electrolytic solution includes: a cyclic carbonate solvent, a mass percentage of which relative to a total mass of the electrolytic solution is denoted as M1%; and a linear carbonate solvent, a mass percentage of which relative to the total mass of the electrolytic solution is denoted as M2%, where the secondary battery satisfies: 10⁻³ ≤ M1/M2 ≤ 2, and preferably, 0.1 ≤ M1/M2 ≤ 1; optionally, 1 ≤ M1 ≤ 20; and/or 50 ≤ M2 ≤ 85. When the mass percentages of the cyclic carbonate solvent and the linear carbonate solvent of the present application are within the above ranges, ionic conductivity of the electrolytic solution can be further improved.

In any embodiment, the cyclic carbonate solvent includes one or more of ethylene carbonate EC, propylene carbonate PC, vinylidene carbonate VC, fluoroethylene carbonate FEC, difluoroethylene carbonate DFEC, vinyl ethylene carbonate VEC, and dicaprylyl carbonate CC; and/or the linear carbonate solvent includes one or more of allyl ethyl carbonate AEC, diphenyl carbonate DPC, methyl allyl carbonate MAC, polycarbonate VA, diethyl carbonate DEC, ethyl methyl carbonate EMC, methyl propyl carbonate MPC, ethyl propyl carbonate EPC, methyl butyl carbonate MBC, methyl acetate MA, ethyl acetate EA, methyl propionate MP, and ethyl propionate EP.

In any embodiment, the electrolytic solution includes: an electrolytic solution film-forming additive, a mass percentage of which based on the total mass of the electrolytic solution is denoted as D1%; and a lithium salt, a mass percentage of which based on the total mass of the electrolytic solution is denoted as D2%, where the secondary battery satisfies: 0.2 ≤ E/(D1+D2) ≤ 2.95, where E represents a viscosity of the electrolytic solution, in mPa·s.

When the secondary battery satisfies the above formula, the dynamics performance of the electrolytic solution can be improved. For example, in a case that a relatively higher content of lithium salt and the electrolytic solution film-forming additive are added, viscosity of the electrolytic solution is improved, which is conducive to coordination of the electrolytic solution and the solid electrolyte, and the electrolytic solution film-forming additive forms a film more easily on the surface of the active material through the solid electrolyte. Under the coordination of the linear carbonate solvent in the electrolytic solution, the viscosity of the electrolytic solution can be further controlled within a relatively low range, which is conducive to migration of lithium ions and ensures dynamics performance of the electrolytic solution.

In any embodiment, a ratio of solution solid mass content to liquid mass content of the solid electrolyte on a percentage basis is denoted as m; a compaction density of the positive electrode film layer is denoted as P1 g/cm³; a thickness of the positive electrode film layer is denoted as h1 µm; and the secondary battery satisfies: 5 ≤ h1 * P1/m ≤ 250. When the secondary battery of the present application satisfies the above ranges, a polymer slurry for the solid electrolyte can effectively cover the active material and provide interface protection. With this limitation, a diffusion path of the polymer slurry is moderate, and coordinates with the viscosity of the polymer slurry to facilitate diffusion of the polymer slurry into the active material. In addition, owing to the moderate compaction density, the positive electrode film layer has a moderate porosity, which is conducive to the diffusion of the polymer slurry into pores of the active material, so that the binding strength between the solid electrolyte formed from the polymer slurry and the active material can be enhanced, and the resistance of an interface between the solid electrolyte and the active material is relatively low.

In any embodiment, a ratio of solution solid mass content and liquid mass content of the solid electrolyte on a percentage basis is denoted as m; a compaction density of the negative electrode film layer is denoted as P2 g/cm³; a thickness of the negative electrode film layer is denoted as h2 µm; and the secondary battery satisfies: 25 ≤ h2 * P2/m ≤ 245. When the secondary battery of the present application satisfies the above range, the polymer slurry can effectively cover the active material. A diffusion path of the polymer slurry is moderate, and coordinates with the viscosity of the polymer slurry to facilitate diffusion of the polymer slurry into the active material. In addition, owing to the moderate compaction density, the negative electrode film layer has a moderate porosity, which is conducive to the diffusion of the polymer slurry into pores of the active material, so that the binding strength between the solid electrolyte formed by the polymer slurry and the active material can be enhanced, and the resistance of an interface between the solid electrolyte and the active material is relatively low.

A second aspect of the present application further provides a battery module, including the secondary battery according to any embodiment of the first aspect of the present application.

A third aspect of the present application further provides a battery pack, including the battery module according to the embodiment of the second aspect of the present application.

A fourth aspect of the present application further provides an electrical device, including the secondary battery according to any embodiment of the first aspect of the present application, the battery module according to the embodiment of the second aspect of the present application, or the battery pack according to the embodiment of the third aspect of the present application.

### DESCRIPTION OF THE DRAWINGS

In order to explain the technical solutions of the embodiments of the present application more clearly, the following will briefly introduce the drawings that need to be used in the embodiments of the present application. Obviously, the drawings described below are only some embodiments of the present application. A person of ordinary skill in the art can obtain other drawings based on the drawings without creative work.
Fig. 1 is a schematic diagram of an embodiment of a secondary battery of the present application.
Fig. 2 is an exploded schematic diagram of an embodiment of the secondary battery in Fig. 1.
Fig. 3 is a schematic diagram of an embodiment of a battery module of the present application.
Fig. 4 is a schematic diagram of an embodiment of a battery pack of the present application.
Fig. 5 is an exploded schematic diagram of an embodiment of the battery pack shown in Fig. 4.
Fig. 6 is a schematic diagram of an embodiment of an electrical device including the secondary battery of the present application as a power source.

The drawings are not drawn to actual scale.

Reference numerals are as follows: 1. Battery pack; 2. Upper box body; 3. Lower box body; 4. Battery module; 5. Secondary battery; 51. Housing; 52. Electrode assembly; 53. Cover plate; 6. Electrical device.

### DETAILED DESCRIPTION

Hereinafter, embodiments of the secondary battery and the battery module, the battery pack and the electrical device containing the same will be described in detail with reference to the accompanying drawings as appropriate. However, unnecessary detailed descriptions may be omitted in some cases, for example the detailed description of a well-known item or the repetitive description of an actually identical structure, so as to prevent the following description from becoming unnecessarily redundant and to facilitate understanding by those skilled in the art. In addition, the drawings and the following description are provided for those skilled in the art to fully understand the present application, and are not intended to limit the subject matter described in the claims.

The "range(s)" disclosed in this application is/are defined in the form of lower and upper limits, and a given range is defined by selection of a lower limit and an upper limit that define boundary of the particular range. Ranges defined in this manner may or may not be inclusive of the endpoints, and may be arbitrarily combined. That is, any lower limit may be combined with any upper limit to form a range. For example, if the ranges of 60-120 and 80-110 are listed for a particular parameter, it is to be understood that the ranges of 60-110 and 80-120 are also contemplated. Additionally, if the minimum range values 1 and 2 are listed, and the maximum range values 3, 4, and 5 are listed, the following ranges are all expected: 1-3, 1-4, 1-5, 2- 3, 2-4 and 2-5. In the present application, unless stated otherwise, the numerical range "a-b" represents an abbreviated representation of any combination of real numbers between a and b, where both a and b are real numbers. For example, the numerical range "0-5" means that all real numbers between "0-5" have been listed herein, and the range "0-5" is just an abbreviated representation of the combination of these numerical values. In addition, when a parameter is expressed as an integer greater than or equal to 2, it is equivalent to disclose that the parameter is, for example, an integer of 2, 3, 4, 5, 6, 7, 8, 9, 10, 11, 12, and the like.

Unless stated otherwise, all the embodiments and the optional embodiments of the present application can be combined with each other to form a new technical solution, and such technical solution should be considered to be included in the disclosure of the present application.

Unless stated otherwise, all steps of the present application can be carried out sequentially, and also can be carried out randomly, preferably they are carried out sequentially. For example, the method includes steps (a) and (b), indicating that the method may include steps (a) and (b) performed in sequence, or that the method may include steps (b) and (a) performed in sequence. For example, reference to the method further comprising step (c) indicates that step (c) may be added to the method in any order. As an example, the method may comprises steps (a), (b) and (c), steps (a), (c) and (b), or steps (c), (a) and (b), and the like.

Unless stated otherwise, the transition phases "comprise", "comprising", "contain" and "containing" mentioned in the present application mean that it is drafted in an open mode, or it may also mean a close mode. For example, the transition phases "comprise", "comprising", "contain" and "containing" may mean that other components not listed may also be included or contained, or only the listed components may be included or contained.

In the present application herein, unless otherwise stated, the term "or" is inclusive. For example, the phrase "A or B" means "A, B, or both A and B". More specifically, any of the following conditions meets "A or B": A is true (or present) and B is false (or absent); A is false (or absent) and B is true (or present); or both A and B are true (or present).

As used herein, the terms "a plurality of" mean two or more.

Secondary batteries are widely used owing to their characteristics such as high capacity and long service life. With the development of the new energy industry, higher requirements have been put forward for electrical performance and reliability of the secondary batteries. Although the energy density, battery capacity, and the like of the secondary batteries have been improved, safety issues may still occur in the secondary batteries. For example, in charging and discharging processes of high-capacity secondary batteries, heat accumulated inside the secondary batteries may cause contact between an anode and a cathode after a separator is damaged, leading to combustion and other phenomena caused by intense redox reactions. Due to inherent safety issues of liquid electrolytes, the development of the secondary batteries is limited. Therefore, it is of great significance to develop secondary batteries with higher safety.

On this basis, the inventors found that solid electrolytes can be used for coating protection treatment on the surface of an electrode plate. The solid electrolytes have higher thermal stability and chemical stability than liquid electrolytic solutions. In addition, because the solid electrolyte is disposed on the surface of the electrode plate, even if the separator is damaged, direct contact between the anode and the cathode can be avoided, thereby achieving a higher safety. Second, the solid electrolytes with wide electrochemical windows can effectively reduce interface side reactions, prolong cycle life of secondary batteries, have good electrochemical stability, and can match positive electrode active materials with higher charge voltages to achieve higher energy density. However, the interface between a solid electrolyte and an active material is a solid-solid interface, so effective contact between the solid electrolyte and the active material is weak, and transport dynamics of metal ions in the solid materials is low, resulting in a high interface resistance.

In view of this, the inventor conducted in-depth research on secondary batteries and found that, by combining a solid electrolyte with an electrolytic solution, specific substances are added to the solid electrolyte to improve protective performance for the active material, reduce resistance between the solid electrolyte and the active material, and improve dynamics performance; and by cooperating with the electrolytic solution with a relatively low viscosity, dynamics performance of the electrolytic solution is improved, so that dynamics performance, safety performance and cycle performance of secondary batteries can be comprehensively improved accordingly. Next, the technical solutions of the present application will be described in detail.

### Secondary battery

In a first aspect, the present application provides a secondary battery. The secondary battery, also known as a rechargeable battery or a storage battery, refers to a battery that can activate an active material by means of charging after discharge and continue to be used.

The secondary battery includes a positive electrode plate, a negative electrode plate, and an electrolytic solution, as well as a solid electrolyte; the positive electrode plate includes a positive electrode film layer; the negative electrode plate includes a negative electrode film layer; the solid electrolyte is disposed on a surface of at least one of the positive electrode film layer and the negative electrode film layer, the solid electrolyte includes a polymer matrix and a first additive, and the first additive is configured to form an interface film on the surface of the positive electrode film layer and/or the negative electrode film layer, where a mass percentage of the polymer matrix relative to a total mass of the solid electrolyte is denoted as A%; and a mass percentage of the first additive relative to the total mass of the solid electrolyte is denoted as B%, and the secondary battery satisfies: 0.5 ≤ B/A ≤ 19.

Although the mechanism is not clear, dynamics performance, safety performance, and cycle performance of the secondary battery in the present application can be comprehensively improved.

The inventor speculated that the mechanism of action of the present application may be as follows:
The solid electrolyte may be disposed on the positive electrode film layer, and the positive electrode film layer includes a positive electrode active material, that is, the solid electrolyte is disposed on the positive electrode active material. The first additive in the solid electrolyte can undergo a film forming reaction with the positive electrode active material to form a cathode solid electrolyte interface film (CEI film) on the surface of the positive electrode active material. The solid electrolyte may alternatively be disposed on the negative electrode film layer, that is, the solid electrolyte is disposed on a negative electrode active material. The first additive in the solid electrolyte can undergo a film forming reaction with the negative electrode active material to form a solid electrolyte interface film (SEI film) on the surface of the negative electrode active material. Alternatively, the solid electrolyte is disposed on both the positive electrode film layer and the negative electrode film layer, that is, the solid electrolyte is disposed on the positive electrode active material and the solid electrolyte is disposed on the negative electrode active material. In the present application, the CEI film and the SEI film are collectively referred to as interface films.

The solid electrolyte is disposed on the active material, and the polymer matrix in the solid electrolyte has certain stickiness, thereby enabling the solid electrolyte to adhere to the surface of the active material. The solid electrolyte has good thermal and chemical stability, and can maintain good cycle stability in charging and discharging processes of the secondary battery and improve cycle performance of the secondary battery. The solid electrolyte further has a wide and stable electrochemical window, which can ensure that the electrolyte is less prone to adverse interface reactions with positive and negative electrodes in the charging and discharging processes, thereby reducing internal resistance of the secondary battery, reducing heat emission, and improving safety performance and service life of the secondary battery.

The polymer matrix generally has a porous structure with a small pore size. When the first additive and the polymer matrix form the solid electrolyte, the first additive can fill pores of the polymer matrix, the first additive can be dispersed uniformly in the polymer matrix, groups in the polymer matrix can coordinate with metal ions such as lithium ions in the first additive, and accompanied by an irregular Brownian motion process of the polymer matrix, the metal ions repeatedly undergo coordination and de-coordination on the polymer matrix, thereby achieving transfer of lithium ions. Since the first additive used for film formation is disposed in the solid electrolyte, it is used in a relatively small amount, and thus moisture content caused by introduction of the first additive can be reduced, thereby reducing the risk of side reactions inside the secondary battery.

After the secondary battery is injected with the electrolytic solution, the electrolytic solution infiltrates the positive and negative electrode plates. With the infiltration of the electrolytic solution, the first additive included in the solid electrolyte can be dissolved in the electrolytic solution, and the dissolved first additive is more likely to form an interface film on the surface of the active material, so as to protect the active material well. In addition, the interface film formed by the first additive on the surface of the active material is not too thick, which is conducive to transfer of metal ions; and the interface film has a low resistance, which is conducive to improving the dynamics performance of the secondary battery. Moreover, the solid electrolyte can further reduce the risk of side reactions caused by contact between a solvent in the electrolytic solution and the positive and negative electrode plates, thereby reducing possibility of decomposition of the electrolytic solution.

In the charging process of the secondary battery, a dynamics process usually includes, when lithium ions are used as an example of the metal ions, the following steps: the lithium ions are de-intercalated from the positive electrode active material and migrate into the electrolyte; the solvated lithium ions in the electrolytic solution diffuse and transfer to the surface of the negative electrode active material; and the lithium ions obtain electrons from the surface of the negative electrode active material and diffuse towards the interior of the negative electrode active material. In the process of de-intercalation of the lithium ions from the positive electrode active material to the electrolyte in the present application, they have a relatively low migration barrier since the CEI film on the surface of the positive electrode active material is thinner; the lithium ions from the electrolytic solution to the negative electrode active material have a relatively low migration barrier since the electrolytic solution as a liquid electrolyte has relatively low viscosity and relatively high ionic conductivity; and the lithium ions from the SEI film to the interior of the negative electrode active material have a relatively low migration barrier since the SEI film on the surface of the negative electrode active material is thinner. Therefore, the lithium ions have a lower migration barrier throughout the entire dynamics process, which requires little energy and is conducive to rapid migration of the lithium ions, resulting in relatively good dynamics performance of the secondary battery.

By combining the solid electrolyte and the liquid electrolyte, the present application can balance advantages of the solid electrolyte and the liquid electrolyte, and can improve dynamics performance, safety performance, and cycle performance of the secondary battery.

### [Solid electrolyte]

The solid electrolyte includes a polymer matrix and a first additive. In some embodiments, the polymer matrix includes one or more of polyethylene oxide PEO, polyurethane PU, polymethyl methacrylate PMMA, polyacrylonitrile PAN, polyvinylidene fluoride PVDF, poly(vinylidene fluoride-hexafluoropropylene) P(VDF-HFP), polypropylene carbonate PPC, polycarbonate PC, polyvinyl chloride PVC, polyethylene carbonate PEC, polylactic acid PLA, polytetrafluoroethylene PTFE, and blends and copolymers containing characteristic functional groups, where the characteristic functional groups include electron withdrawing groups. By way of example, the electron withdrawing groups include one or more of polymers containing polar atoms or polar groups such as fluorine atom F, nitrogen atom N, sulfur atom S, carbonyl-C=O, nitrile-CN, and sulfonyl-S=O.

The blends can be used for the adjustment of physical and chemical properties of materials, such as various blend systems including PVDF-HFP/polyethyl methacrylate PEMA, PEO/PVDF, PVDF-HFP/polyvinyl acetate PVAc, PVC/PMMA, PVDF-HFP/PMMA, PVDF-HFP/PAN, and the like; and copolymer systems include PEO-polystyrene PSt, polydimethylsiloxane (PDMS)-PEO, PEGMA-MMA-IBVE, PEO-PMMA, POEM-PBMA, PPG-PEG-PPG, MMA-AN-BA, and the like.

The foregoing polymer matrix has good mechanical properties, and the solid electrolyte formed therefrom has good flexibility and can form a stable and good electrode-electrolyte interface with the active material. Moreover, molecular segments of the polymers in the foregoing polymer matrix have a capability of thermal motion, the thermal motion of the polymer segments intensifies as the temperature increases. Thus, the polymer matrix is capable of transferring lithium ions, which is conducive to a continuous coordination-dissociation-coordination process between the metal ions such as lithium ions and the characteristic atoms and groups, thereby achieving transport of the lithium ions within or between the molecular chains of the polymer matrix to form the solid electrolyte with high ionic conductivity.

In some embodiments, based on the total mass of the solid electrolyte, the mass percentage A% of the polymer matrix is: 5 ≤ A ≤ 99. When the mass percentage of the polymer matrix is within the above range, it is possible to guarantee adhesion between the polymer matrix and the active material, and the solid electrolyte is unlikely to detach from the surface of the active material in the charging and discharging processes of the secondary battery. Optionally, 5 ≤ A ≤ 70. By way of example, the mass percentage A% of the polymer matrix may be 5%, 10%, 15%, 25%, 35%, 45%, 55%, 65%, 70%, 90%, 95%, 99%, or a range of any two foregoing values.

In some embodiments, the first additive may be used for forming an interface film on the surface of the positive electrode film layer and/or the negative electrode film layer. Based on the total mass of the solid electrolyte, the mass percentage B% of the first additive is 0.1 ≤ B ≤ 95.

When the mass percentage of the first additive is within the above range, the first additive can be ensured to form a uniform and stable interface film on the positive electrode film layer and/or the negative electrode film layer, and the resistance of the interface film is relatively low, which is conducive to improving the dynamics performance of the secondary battery. Optionally, 10 ≤ B ≤ 95. By way of examples, the mass percentage B% of the first additive may be 0.1%, 1%, 5%, 10%, 20%, 30%, 40%, 50%, 60%, 70%, 80%, 95%, or a range of any two foregoing values.

In some embodiments, the first additive may include a conductive lithium salt to ensure smooth migration of lithium ions. The conductive lithium salt may be a boron-containing lithium salt. The boron-containing lithium salt has good compatibility with the polymer matrix, and the addition of the boron-containing lithium salt can reduce a glass transition temperature of the polymer matrix to some extent and improve mechanical strength of the polymer matrix and a stable temperature of an amorphous phase. The boron-containing lithium salt has large anionic groups, and easily dissociates lithium ions, thereby ensuring solubility of the lithium ions and improving ionic conductivity of the polymer electrolyte.

In some embodiments, the boron-containing lithium salt has a molecular formula of LiBFₐO_{b}C_{c}P_{d}, where 0 ≤ a ≤ 4, 0 ≤ b ≤ 8, 0 ≤ c ≤ 4, and 0 ≤ d ≤ 4.

A B atom may combine with an oxygen-containing oxalate ligand, and the combined product has excellent thermal stability and easily forms an SEI film with excellent performance on the surface of the negative electrode active material, thereby ensuring structural stability of the negative electrode active material and then improving cycle performance of the secondary battery. Of course, the B atom may alternatively combine with a halogen atom, especially a fluorine atom, the fluorine atom has a strong electron-withdrawing induction effect and high thermal and chemical stability, and the lithium ions have high solubility in the electrolytic solution, whereby the solubility of the lithium ions can be ensured and conductivity of the electrolytic solution can be ensured accordingly.

As an example, the boron-containing lithium salt includes one or more of lithium tetrafluoroborate (LiBF₄), lithium bisoxalate borate (LiB(C₂O₄)₂, abbreviated as LiBOB), and lithium difluorooxalate borate (LiBC₂O₄F₂, abbreviated as LiDFOB). Further, the boron-containing lithium salt includes a combination of lithium tetrafluoroborate LiBF₄, lithium bisoxalate borate (LiB(C₂O₄)₂, abbreviated as LiBOB), and lithium difluorooxalate borate (LiBC₂O₄F₂, abbreviated as LiDFOB).

When the lithium tetrafluoroborate (LiBF₄) is used with an organic solvent such as a carbonate solvent in the electrolytic solution or an additive, the system based on the lithium tetrafluoroborate has a relatively low viscosity, which is conducive to the release of lithium ions, thereby improving conductivity of the electrolytic solution. The SEI film formed from the lithium tetrafluoroborate has a uniform thickness, good dynamics activity, and low charge transfer resistance in the secondary battery, which can significantly improve low-temperature performance of the secondary battery; and the SEI film is less prone to thermal decomposition, has relatively stable performance at high temperatures, and therefore can significantly improve the high-temperature performance of the secondary battery.

Either the lithium bisoxalate borate LiBOB or the lithium difluorooxalate borate LiDFOB has a passivation effect on a positive electrode current collector in the positive electrode plate, which can reduce the risk of corrosion of the positive electrode current collector due to side reactions with the positive electrode current collector and improve structural stability of the positive electrode plate. In addition, the electrolytic solution containing either the lithium bisoxalate borate LiBOB or the lithium difluorooxalate borate LiDFOB is unlikely to produce acidic substances, which can further reduce the risk of corrosion of the positive electrode current collector. The lithium bisoxalate borate LiBOB and the lithium difluorooxalate borate LiDFOB have good compatibility with the positive electrode active material, which is conducive to migration of lithium ions; and the LiBOB or the LiDFOB can form an effective SEI film on the surface of the negative electrode active material to improve protective performance for the negative electrode active material.

When the lithium tetrafluoroborate LiBF₄, the lithium bisoxalate borate LiBOB and the lithium difluorooxalate borate LiDFOB are used together, the SEI film formed from the three has a more complicated composition and a more stable structure; and on the basis of ensuring the structural stability, it is possible to enable the SEI film to have a relatively small impedance, thereby ensuring the low-temperature performance of the secondary battery.

In some embodiments, based on the total mass of the solid electrolyte, a mass percentage of the boron-containing lithium salt is denoted as B1%, and 0.1 ≤ B1 ≤ 50.

When the mass percentage of the boron-containing lithium salt is within the above range, the ionic conductivity of the solid electrolyte can be ensured, and the positive electrode current collector and the negative electrode active material can be protected well. By way of example, the mass percentage B1% of the boron-containing lithium salt may be 0.1%, 0.5%, 1%, 2%, 10%, 20%, 25%, or 50%.

In some embodiments, the conductive lithium salt may further include an ion conducting lithium salt, which includes one or more of lithium hexafluorophosphate LiPF₆, lithium difluorophosphate LiPO₂F₂, lithium difluorobioxalate phosphate LiDODFP, lithium tetrafluorooxalate phosphate LiDFBP, lithium bis(fluorosulfonyl)imide LiFSI, lithium bis(trifluoromethanesulphonyl)imide LiTFSI, lithium fluorosulfonate LiSO₃F, lithium nitrate LiNO₃, lithium perchlorate LiClO₄, lithium hexafluoroantimonate LiSbF₆, and lithium hexafluoroarsenate LiAsF₆. The ion conducting lithium salt has relatively high dissociation and high conductivity, which are conducive to migration of lithium ions.

In some embodiments, the first additive may include a negative electrode film-forming additive, which includes one or more of a carbonate additive, a sulfate additive, and a sulfite additive.

The combination of the negative electrode film-forming additive and the boron-containing lithium salt forms the SEI film on the surface of the negative electrode active material, and the formation of the SEI film on the surface from a plurality of components can enrich the structure of the SEI film and improve the structural stability of the SEI film. Further, the negative electrode film-forming additive includes at least two of a carbonate additive, a sulfate additive, a sulfite additive, and a lithium fluorooxalate phosphate. The SEI film formed therefrom has a relatively complex composition and higher structural stability.

Based on the total mass of the solid electrolyte, a mass percentage of the negative electrode film-forming additive is denoted as B2%, and 0.1 ≤ B2 ≤ 50.

When the mass percentage of the negative electrode film-forming additive is within the above range, it is possible to ensure the negative electrode film-forming additive to form a uniform and stable SEI film, which further improves the protective performance for the negative electrode active material. By way of example, the mass percentage B2% of the negative electrode film-forming additive may be 0.1%, 0.5%, 1%, 2%, 10%, 20%, 25%, or 50%.

In some embodiments, 0.002 ≤ B1/B2 ≤ 9.

When the mass percentage of the negative electrode film-forming additive is within the above range, the negative electrode film-forming additive and the boron-containing lithium salt can jointly form a uniform and stable SEI film, which further improves the protective performance for the negative electrode active material. For example, B 1B2 may be 0.002, 0.2, 0.5, 1, 2, 5, or 9.

As an example, the carbonate additive includes a cyclic carbonate additive and/or a linear carbonate additive. Further, the cyclic carbonate additive includes one or more of vinylidene carbonate VC, fluoroethylene carbonate FEC, difluoroethylene carbonate DFEC, vinyl ethylene carbonate VEC, and dicaprylyl carbonate CC. The linear carbonate additive includes one or more of allyl ethyl carbonate AEC, diphenyl carbonate DPC, methyl allyl carbonate MAC, and polycarbonate VA.

As an example, the sulfate additive includes a cyclic sulfonate additive and/or a hydrocarbyl sulfate additive. Further, the cyclic sulfonate additive includes one or more of 1,3-propane sultone PS, propene sultone PES, and 3-fluoro-1,3-propane sultone FPS. The hydrocarbyl sulfate additive includes one or more of ethylene sulfate DTD, diethyl sulfate DES, and dimethyl sulfate DMS.

As an example, the sulfite additive includes ethylene sulfite ES and/or vinyl ethylene sulfite VES.

In some embodiments, the solid electrolyte may further include a solvent, such as at least one of acetonitrile, tetrahydrofuran, acetone, N-methylpyrrolidone, and N,N-dimethylformamide, to increase compatibility between the polymer matrix and the first additive.

In some embodiments, the solid electrolyte may further include auxiliaries, such as a plasticizer and ionic liquid, to increase ionic conductivity of the solid electrolyte and migration number of lithium ions and improve compatibility between the electrode and electrolyte interfaces. For example, the plasticizer may be ethylene carbonate EC, propylene carbonate PC, or the like.

The solid electrolyte may be prepared by the following method: the polymer matrix, the first additive, and the like are mixed uniformly to form a polymer slurry, which is applied and transferred to the surface of the electrode plate by a solution pouring method and solidified into a film.

### [Electrolytic solution]

The electrolytic solution functions as conducting metal ions between the positive electrode plate and the negative electrode plate, and the electrolytic solution in the present application may be an electrolytic solution commonly known in the art for secondary batteries. The electrolytic solution includes a lithium salt and an organic solvent.

In some embodiments, the lithium salt may be selected from at least one or more of lithium hexafluorophosphate LiPF₆, lithium difluorophosphate LiPO₂F₂, lithium difluorobioxalate phosphate LiDODFP, lithium tetrafluorooxalate phosphate LiDFBP, lithium bis(fluorosulfonyl)imide LiFSI, lithium bis(trifluoromethanesulphonyl)imide LiTFSI, lithium fluorosulfonate LiSO₃F, lithium nitrate LiNO₃, lithium perchlorate LiClO₄, lithium hexafluoroantimonate LiSbF₆, and lithium hexafluoroarsenate LiAsF₆. Based on a total mass of the electrolytic solution, a mass percentage of the lithium salt is denoted as D2%.

Further, 1 ≤ D2 ≤ 25. The lithium salt within the above range can ensure that the electrolytic solution provides a sufficient lithium source to form an ion pathway, and also enables the electrolytic solution to have a high ionic conductivity.

For example, D2 may be 1, 2, 3, 4, 5, 6, 7, 8, 9, 10, 12, 15, 17, 19, 20, 21, 22, 23, 25, or a range of any two foregoing values.

In some embodiments, the organic solvent may include a carbonate solvent; and the carbonate solvent includes a cyclic carbonate solvent and a linear carbonate solvent. The combination of the cyclic carbonate solvent and the linear carbonate solvent enables the electrolytic solution to have a high dielectric constant and low viscosity, and can improve ionic conductivity of the electrolytic solution. In addition, the electrolytic solution has a relatively high electrochemical stability, and its electrochemical window is significantly improved.

In some embodiments, a mass percentage of the cyclic carbonate solvent relative to the total mass of the electrolytic solution is denoted as M1%, a mass percentage of the linear carbonate solvent relative to the total mass of the electrolytic solution is denoted as M2%, and 10⁻³ ≤ M1/M2 ≤ 2.

When the mass percentages of the cyclic carbonate solvent and the linear carbonate solvent are within the above range, the ionic conductivity of the electrolytic solution can be further improved. Optionally, 0.1 ≤ M1/M2 ≤ 1. For example, M1/M2 may be 0.001, 0.01, 0.1, 0.2, 0.5, 0.7, 0.9, 1, or a range of any two foregoing values.

As an example, the cyclic carbonate solvent includes one or more of ethylene carbonate EC, propylene carbonate PC, vinylidene carbonate VC, fluoroethylene carbonate FEC, difluoroethylene carbonate DFEC, vinyl ethylene carbonate VEC, and dicaprylyl carbonate CC.

Further, 1 ≤ M1 ≤ 20. When the mass percentage of the cyclic carbonate solvent is within the above range, it promotes dissociation of lithium ions and the lithium ions have a higher solubility, which can further improve the ionic conductivity of the electrolytic solution. For example, M1 may be 1, 5, 7, 8, 9, 10, 11, 12, 13, 14, 15, 16, 17, 18, 19, 20, or a range of any two foregoing values.

As an example, the linear carbonate solvent includes one or more of allyl ethyl carbonate AEC, diphenyl carbonate DPC, methyl allyl carbonate MAC, polycarbonate VA, diethyl carbonate DEC, ethyl methyl carbonate EMC, methyl propyl carbonate MPC, ethyl propyl carbonate EPC, methyl butyl carbonate MBC, methyl acetate MA, ethyl acetate EA, methyl propionate MP, and ethyl propionate EP.

Further, 50 ≤ M2 ≤ 85. When the mass percentage of the linear carbonate solvent is within the above range, it may provide a lower viscosity for the electrolytic solution, which is conducive to smooth migration of lithium ions and improvement on the dynamics performance of the electrolytic solution. For example, M2 may be 50, 52, 55, 56, 58, 60, 62, 65, 66, 68, or 85.

In some embodiments, the organic solvent may further include an ether solvent. The ether solvent with low viscosity can increase the ionic conductivity of the electrolytic solution and enable the lithium ions to maintain good morphological structures in the electrolytic solution during cycling. By way of example, the ether solvent includes diethyl ether, polymethoxyether, or the like.

In some embodiments, the organic solvent may further include a nitrile solvent. The nitrile solvent has a high stability, which can improve an overall stability of the electrolytic solution. For example, the nitrile solvent may include adiponitrile, glutaronitrile, or the like.

Of course, the organic solvent may further include other types of solvents, such as a sulfone solvent.

By way of example, the organic solvent is selected from at least one of ethylene carbonate, propylene carbonate, ethyl methyl carbonate, diethyl carbonate, dimethyl carbonate, dipropyl carbonate, methyl propyl carbonate, ethylene propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, ethyl methyl sulfone, and diethyl sulfone.

In some embodiments, the electrolytic solution may further optionally include an electrolytic solution additive. For example, the electrolytic solution additive may include an electrolytic solution film-forming additive such as a negative electrode film-forming additive, a positive electrode film-forming additive, and additives that can improve some performances of the battery, such as an additive that improves overcharge performance of the battery and an additive that improves high-temperature or low-temperature performance of the battery. For example, the negative electrode film-forming additive includes one or more of a carbonate additive, a sulfate additive, and a sulfite additive. A specific type of the electrolytic solution film-forming additive is as described in the solid electrolyte and will not be repeated here. Based on the total mass of the electrolytic solution, a mass percentage of the electrolytic solution film-forming additive is denoted as D1%.

Optionally, 10⁻³ ≤ D1 ≤ 10. When D1 is within the above range, it is possible to ensure to form an interface film fully on the surface of the active material to improve the protective effect on the active material. Optionally, 0.1 ≤ D1 ≤ 10. For example, D1 may be 10⁻³, 10⁻², 0.1, 0.5, 1, 2, 3, 4, 5, 6, 7, 8, 9, 10, or a range of any two foregoing values.

In some embodiments, the secondary battery further satisfies: 0.2 ≤ E/(D2+D1) ≤ 2.95, where E represents a viscosity of the electrolytic solution, in mPa s.

When the secondary battery satisfies the above formula, it is conducive to improve the dynamics performance of the electrolytic solution. For example, in a case that a relatively high content of lithium salt and the electrolytic solution film-forming additive are added, the electrolytic solution has an elevated viscosity, which is conducive to the coordination of the electrolytic solution and the solid electrolyte, and the electrolytic solution film-forming additive forms a film more easily on the surface of the active material through the solid electrolyte. Under the coordination of the linear carbonate solvent in the electrolytic solution, the viscosity of the electrolytic solution can be further controlled within a relatively low range, which is conducive to migration of lithium ions and ensures the dynamics performance of the electrolytic solution. For example, E/(D2+D1) may be 0.2, 0.25, 0.28, 1, 1.2, 1.5, 1.8, 2, 2.5, 2.95, or a range of any two foregoing values.

Further, 0.1 ≤ E ≤ 8. By way of example, E may be 0.1, 0.5, 1, 1.5, 2, 2.5, 3, 3.5, 4, 5, 6, 7, 8, or a range constituted by any two foregoing values. When E is within the above range, the viscosity of the electrolytic solution can be controlled within an appropriate range, which is conducive to migration of lithium ions.

### [Positive electrode plate]

In some embodiments, the positive electrode plate includes a positive electrode current collector and a positive electrode film layer disposed on at least one surface of the positive electrode current collector. For example, the positive electrode current collector has two opposite surfaces in its thickness direction, and the positive electrode film layer is disposed on either or both of the two opposite surfaces of the positive electrode current collector.

In some embodiments, the solid electrolyte is disposed on a surface of the positive electrode film layer, that is, on a surface, away from the positive electrode current collector, of the positive electrode film layer, which can protect the positive electrode plate well, thereby ensuring the structural stability of the positive electrode plate and improving the cycle performance of the secondary battery.

In some embodiments, a ratio of solution solid mass and liquid mass of the solid electrolyte on a percentage basis is denoted as m; a compaction density of the positive electrode film layer is denoted as P1 g/cm³; a thickness of the positive electrode film layer is denoted as h1 µm; and the secondary battery satisfies: 5 ≤ h1 * P1/m ≤ 250.

Solid substances in the solid electrolyte include a polymer matrix, a boron-containing lithium salt, and the like, a mass percentage of which relative to the solid electrolyte is the solution solid mass of the solid electrolyte. A mass percentage of liquid substances in the solid electrolyte, such as solvents, relative to the solid electrolyte, is the liquid mass of the solid electrolyte. A ratio of the solution solid mass to the liquid mass of the solid electrolyte on a percentage basis is denoted as m.

In the present application, the compaction density of the material has a well-known meaning in the art and can be tested using instruments and methods known in the art. For example, the compaction density may be tested with an electronic pressure tester (such as UTM7305) with reference to GB/T24533-2009. An exemplary testing method is as follows: 1 g of material is weighed and added to a mold with a bottom area of 1.327 cm², pressure is applied to 2000 kg (equivalent to 20000 N), held for 30 s, and then released. After that, the test sample is held for 10 s, and a compaction density of the material under the force of 20000 N is recorded and calculated.

When the secondary battery satisfies the above ranges, a polymer slurry for the solid electrolyte can effectively cover the active material and provide interface protection. With this limitation, a diffusion path of the polymer slurry is moderate, and coordinates with the viscosity of the polymer slurry to facilitate diffusion of the polymer slurry into the active material. In addition, towing to the moderate compaction density, the positive electrode film layer has a moderate porosity, which is conducive to the diffusion of the polymer slurry into pores of the active material, so that the binding strength between the solid electrolyte formed from the polymer slurry and the active material can be enhanced, and the resistance of an interface between the solid electrolyte and the active material is relatively low. Optionally, 100 ≤ h1 × P1/m ≤ 250. For example, h1 * P1/m may be 0.4, 0.8, 1, 2, 3, 5, 8, 10, 15, 20, 25, 30, 35, 40, 45, 50, 55, 60, 65, 70, 75, 80, 85, 90, 100, 110, 120, 150, 160, 170, 180, 190, 200, 220, 250, 260, 280, 300, or a range of any two foregoing values.

Further, 1 ≤ m ≤ 50. m may be 1, 2, 5, 10, 15, 20, 25, 30, 35, 40, 45, 50, or a range of any two foregoing values.

Further, 10 ≤ h1 ≤ 300. h1 may be 10, 20, 50, 60, 80, 100, 120, 150, 180, 200, 220, 250, 280, 300, or a range of any two foregoing values.

Further, 0.1 ≤ P1 ≤ 5. P1 may be 0.1, 0.5, 1, 1.5, 2.0, 2.5, 3.0, 3.5, 4.0, 4.5, 5, or a range of any two foregoing values.

The positive electrode film layer includes a positive electrode active material, which may be a positive electrode active material commonly known in the art for secondary batteries. For example, the positive electrode active material may include at least one of a lithium transition metal oxide, a lithium-containing phosphate with an olivine structure, and respective modified compounds thereof. Examples of the lithium transition metal oxide may include at least one of a lithium cobalt oxide, a lithium nickel oxide, a lithium manganese oxide, a lithium nickel cobalt oxide, a lithium manganese cobalt oxide, a lithium nickel manganese oxide, a lithium nickel cobalt manganese oxide, a lithium nickel cobalt aluminum oxide, and respective modified compounds thereof. Examples of the lithium-containing phosphate with an olivine structure may include at least one of a lithium iron phosphate, a composite material of a lithium iron phosphate and carbon, a lithium manganese phosphate, a composite material of a lithium manganese phosphate and carbon, a lithium manganese iron phosphate, a composite material of a lithium manganese iron phosphate and carbon, and respective modified compounds thereof. The present application is not limited to these materials, and may also use other conventionally known materials that can be used as positive electrode active materials of secondary batteries. These positive electrode active materials may be used alone, or may be combined with two or more.

In some embodiments, the positive electrode active material includes LiNiₓCo_{y}Mn_{z}M_{1-x-y-z}O₂ or LiNiₐCo_{b}Al_{c}N_{1-a-b-c}O₂, where M and N are any one independently selected from Co, Ni, Mn, Mg, Cu, Zn, Al, Sn, B, Ga, Cr, Sr, V and Ti, 0 ≤ y ≤ 1, 0 ≤ x < 1, 0 ≤ z ≤ 1, x+y+z ≤ 1, 0 ≤ a ≤ 1, 0 ≤ b ≤ 1, 0 ≤ c ≤ 1, and a+b+c ≤ 1. The positive electrode active material is used with the boron-containing lithium salt, and B atoms in the boron-containing lithium salt easily combine with O atoms in the positive electrode active material, thereby reducing charge transfer resistance of the positive electrode active material and reducing diffusion resistance of lithium ions within a bulk phase of the positive electrode active material. Therefore, when the non-aqueous electrolytic solution contains appropriate amounts of lithium tetrafluoroborate and lithium difluorooxalate borate, the low-cobalt or cobalt-free positive electrode active material can have a significantly improved lithium ion diffusion rate, and lithium ions in the bulk phase of the low-cobalt or cobalt-free positive electrode active material can be replenished to the surface in a timely manner so that excessive lithium de-intercalation from the surface of the low-cobalt or cobalt-free cathode active material may be avoided, thereby stabilizing crystal structure of the low-cobalt or cobalt-free cathode active material. The more stable crystal structure of the low-cobalt or cobalt-free positive electrode active material can greatly reduce probability of instability in structural, chemical, or electrochemical properties of the positive electrode active material due to the excessive lithium de-intercalation from the surface of the low-cobalt or cobalt-free positive electrode active material, such as irreversible distortion and increased lattice defects of the positive electrode active material.

LiNiₓCo_{y}Mn_{z}M_{1-x-y-z}O₂ or LiNiₐCo_{b}Al_{c}N_{1-a-b-c}O₂ may be prepared according to a conventional method in the art. An exemplary preparation method is as follows: a lithium source, a nickel source, a cobalt source, a manganese source, an aluminum source, a precursor of an M element, and a precursor of an N element are mixed and sintered. The sintering atmosphere may be an oxygen-containing atmosphere, such as air atmosphere or oxygen atmosphere. The sintering atmosphere has an O₂ concentration of, for example, 70% to 100%. The sintering temperature and time may be adjusted according to an actual situation.

As an example, the lithium source includes, but is not limited to, at least one of lithium oxide (Li₂O), lithium phosphate (Li₃PO₄), lithium dihydrogen phosphate (LiH₂PO₄), lithium acetate (CH₃COOLi), lithium hydroxide (LiOH), lithium carbonate (Li₂CO₃), and lithium nitrate (LiNO₃). As an example, the nickel source includes, but is not limited to, at least one of nickel sulfate, nickel nitrate, nickel chloride, nickel oxalate, and nickel acetate. As an example, the cobalt source includes, but is not limited to, at least one of cobalt sulfate, cobalt nitrate, cobalt chloride, cobalt oxalate, and cobalt acetate. As an example, the manganese source includes, but is not limited to, at least one of manganese sulfate, manganese nitrate, manganese chloride, manganese oxalate, and manganese acetate. As an example, the aluminum source includes, but is not limited to, at least one of aluminum sulfate, aluminum nitrate, aluminum chloride, aluminum oxalate, and aluminum acetate. As an example, the precursor of the M element includes, but is not limited to, at least one of oxides, nitrate compounds, carbonate compounds, hydroxide compounds, and acetate compounds of the M element. As an example, the precursor of the N element includes, but is not limited to, at least one of ammonium fluoride, lithium fluoride, hydrogen fluoride, ammonium chloride, lithium chloride, hydrogen chloride, ammonium nitrate, ammonium nitrite, ammonium carbonate, ammonium bicarbonate, ammonium phosphate, phosphoric acid, ammonium sulfate, ammonium bisulfate, ammonium bisulfite, ammonium sulfite, ammonium bisulfide, hydrogen sulfide, lithium sulfide, ammonium sulfide, and elemental sulfur.

In some embodiments, based on a total mass of the positive electrode film layer, a layered material with molecular formula LiNiₓCo_{y}Mn_{z}M_{1-x-y-z}O₂ or LiNiₐCo_{b}Al_{c}N_{1-a-b-c}O₂ has a mass percentage of 80% to 99%. For example, the mass percentage of the layered material with molecular formula LiNiₓCo_{y}Mn_{z}M_{1-x-y-z}O₂ or LiNiₐCo_{b}Al_{c}N_{1-a-b-c}O₂ may be 80%, 81%, 82%, 83%, 84%, 85%, 86%, 87%, 88%, 89%, 90%, 91%, 92%, 93%, 94%, 95%, 96%, 97%, 98%, 99%, or a range of any of the above values. Optionally, the mass percentage of the layered material with molecular formula LiNiₓCo_{y}Mn_{z}M_{1-x-y-z}O₂ or LiNiₐCo_{b}Al_{c}N_{1-a-b-c}O₂ is 85% to 99%, 90% to 99%, 95% to 99%, 80% to 98%, 85% to 98%, 90% to 98%, 95% to 98%, 80% to 97%, 85% to 97%, 90% to 97%, or 95% to 97%.

In some embodiments, the positive electrode film layer may further optionally include a positive electrode conductive agent. There is no particular limitation to the type of the positive electrode conductive agent in the present application. As an example, the positive electrode conductive agent includes one or more of superconducting carbon, conductive graphite, acetylene black, carbon black, Ketjen black, carbon dots, carbon nanotubes, graphene, and carbon nanofibers. In some embodiments, based on the total mass of the positive electrode film layer, the positive electrode conductive agent is present in a mass percentage of 5% or less.

In some embodiments, the positive electrode film layer may further optionally include a positive electrode binder. There is no particular limitation on the type of the positive electrode binder in the present application. As an example, the positive electrode binder may include one or more of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluoroacrylate resin. In some embodiments, based on the total mass of the positive electrode film layer, the positive electrode binder is present in a mass percentage of 5% or less.

In some embodiments, the positive electrode current collector may be a metal foil or a composite current collector. As an example of the metal foil, an aluminum foil or an aluminum alloy foil may be used. The composite current collector may include a polymer material base layer and a metal material layer formed on at least one surface of the polymer material base layer. As an example, the metal material may include one or more of aluminum, aluminum alloy, nickel, nickel alloy, titanium, titanium alloy, silver and silver alloy, and the polymer material base layer may include one or more of polypropylene (PP), polyethylene terephthalate (PET), polybutylene terephthalate (PBT), polystyrene (PS) and polyethylene (PE).

The positive electrode film layer is usually formed by coating the positive electrode current collector with a positive electrode slurry, drying, and cold-pressing. The positive electrode slurry is usually formed by dispersing the positive electrode active material, the optional conductive agent, the optional binder, and any other components in a solvent and stirring uniformly. The solvent may be N-methylpyrrolidone (NMP), but is not limited thereto.

The electrolytic solution of the present application may be prepared according to a conventional method in the art. For example, an additive, a solvent, an electrolyte salt, and the like may be mixed uniformly to obtain the electrolytic solution. An order of adding the materials is not specially limited. For example, the additive, the solvent, the electrolyte salt, and the like may be added into a non-aqueous solvent and mixed uniformly to obtain a non-aqueous electrolytic solution.

In the present application, each component and its content in the electrolytic solution may be measured according to methods known in the art, such as gas chromatography-mass spectrometry (GC-MS), ion chromatography (IC), liquid chromatography (LC), or nuclear magnetic resonance spectroscopy (NMR).

It should be noted that, when the electrolytic solution of the present application is tested, a fresh electrolytic solution may be directly taken, or the electrolytic solution may be obtained from the secondary battery. An exemplary method for obtaining the electrolytic solution from the secondary battery includes the following steps: the secondary battery is discharged to a discharge cut-off voltage (for safety reasons, the battery is generally in a fully discharged state) and centrifuged, and then an appropriate amount of centrifuged liquid, namely, a non-aqueous electrolytic solution, is taken. The non-aqueous electrolytic solution may alternatively be directly obtained from an injection port of the secondary battery.

### [Negative electrode plate]

The negative electrode plate includes a negative electrode current collector and a negative electrode film layer disposed on at least one surface of the negative electrode current collector, and the negative electrode film layer includes a negative electrode active material.

As an example, the negative electrode current collector has two surfaces opposite in its thickness direction, and the negative electrode film layer is disposed on either or both of the two opposite surfaces of the negative electrolyte current collector.

In some embodiments, the solid electrolyte is disposed on a surface of the negative electrode film layer, that is, on a surface, away from the negative electrode current collector, of the negative electrode film layer, which can protect the negative electrode plate well, thereby ensuring the structural stability of the negative electrode plate and improving the cycle performance of the secondary battery.

In some embodiments, a ratio of solution solid mass and liquid mass of the solid electrolyte on a percentage basis is denoted as m; a compaction density of the negative electrode film layer under a force of 20000 N is denoted as P2 g/cm³; a thickness of the negative electrode film layer is denoted as h2 µm; and the secondary battery satisfies: 25 ≤ h2 × P2/m ≤ 245.

When the secondary battery satisfies the above ranges, the polymer slurry can effectively cover the active material. A diffusion path of the polymer slurry is moderate, and coordinates with the viscosity of the polymer slurry to facilitate diffusion of the polymer slurry into the active material. In addition, towing to the moderate compaction density, the negative electrode film layer has a moderate porosity, which is conducive to the diffusion of the polymer slurry into pores of the active material, so that the binding strength between the solid electrolyte formed by the polymer slurry and the active material can be enhanced, and the resistance of an interface between the solid electrolyte and the active material is relatively low. Optionally, 50 ≤ h2 * P2/m ≤ 200. For example, h2 * P2/m may be 0.04, 0.08, 0.1, 0.2, 0.3, 0.4, 0.8, 1, 2, 3, 5, 8, 10, 15, 20, 25, 30, 35, 40, 45, 50, 55, 60, 65, 70, 75, 80, 85, 90, 100, 110, 120, 150, 160, 170, 180, 190, 200, or a range of any two foregoing values.

Further, 1 ≤ m ≤ 50. m may be 1, 2, 5, 10, 15, 20, 25, 30, 35, 40, 45, 50, or a range of any two foregoing values.

Further, 10 ≤ h2 ≤ 300. h2 may be 10, 20, 50, 60, 80, 100, 120, 150, 180, 200, 220, 250, 280, 300, or a range of any two foregoing values.

Further, 1 ≤ P2 ≤ 5. P2 may be 1, 1.5, 2.0, 2.5, 3.0, 3.5, 4.0, 4.5, 5, or a range of any two foregoing values.

In some embodiments, the negative electrode active material may be a negative electrode active material commonly known in the art for batteries. As an example, the negative electrode active material may include at least one of artificial graphite, natural graphite, soft carbon, hard carbon, a silicon-based material, a tin-based material, lithium titanate, lithium-aluminum alloy, and the like. The silicon-based material may be selected from at least one of elemental silicon, a silicon oxide compound, a silicon carbon composite, a silicon nitrogen composite, and a silicon alloy. The tin-based material may be selected from at least one of elemental tin, a tin oxide compound, and a tin alloy. However, the present application is not limited to these materials, and other conventional materials that may be used as negative electrode active materials of batteries may alternatively be used. One type of these negative electrode active materials may be used alone, or two or more types may be used in combination.

In some embodiments, the negative electrode film layer may further optionally include a negative electrode binder. There is no particular limitation on the type of the negative electrode binder in the present application. As an example, the negative electrode binder may include one or more of styrene butadiene rubber (SBR), water-soluble unsaturated resin SR-1B, water-based acrylic resin such as polyacrylic acid PAA, polymethacrylic acid PMAA, and polyacrylic acid sodium PAAS, polyacrylamide (PAM), polyvinyl alcohol (PVA), sodium alginate (SA), and carboxymethyl chitosan (CMCS). In some embodiments, based on a total mass of the negative electrode film layer, the negative electrode binder is present in a mass percentage of 5% or less.

In some embodiments, the negative electrode film layer may further optionally include a negative electrode conductive agent. There is no particular limitation on the type of the negative electrode conductive agent in the present application. As an example, the negative electrode conductive agent includes one or more of superconducting carbon, conductive graphite, acetylene black, carbon black, Ketjen black, carbon dots, carbon nanotubes, graphene, and carbon nanofibers. In some embodiments, based on the total mass of the negative electrode film layer, the negative electrode conductive agent is present in a mass percentage of 5% or less.

In some embodiments, the negative electrode film layer may further optionally include other auxiliaries. As an example, the other auxiliaries may include a thickener, such as carboxymethyl cellulose sodium (CMC-Na) or a PTC thermistor material. In some embodiments, based on the total mass of the negative electrode film layer, the other auxiliaries are present in a total mass percentage of 2% or less.

In some embodiments, the negative electrode current collector may be a metal foil or a composite current collector. As an example of the metal foil, a copper foil or a copper alloy foil may be used. The composite current collector may include a polymer material base layer and a metal material layer formed on at least one surface of the polymer material base layer. As an example, the metal material may include one or more of copper, copper alloy, nickel, nickel alloy, titanium, titanium alloy, silver and silver alloy, and the polymer material base layer may include one or more of polypropylene (PP), polyethylene terephthalate (PET), polybutylene terephthalate (PBT), polystyrene (PS) and polyethylene (PE).

The negative electrode film layer is usually formed by coating the negative electrode current collector with a negative electrode slurry, drying, and cold-pressing. The negative electrode slurry is usually formed by dispersing the negative electrode active material, the optional conductive agent, the optional binder, and the other optional auxiliaries in a solvent and stirring uniformly. The solvent may be N-methylpyrrolidone (NMP) or deionized water, but is not limited thereto.

The negative electrode plate does not exclude other additional functional layers than the negative electrode film layer. For example, in some embodiments, the negative electrode plate further includes a protective layer covering the surface of the negative electrode film layer.

Mass percentages of substances in the present application may be measured according to methods known in the art, such as gas chromatography-mass spectrometry (GC-MS), ion chromatography (IC), liquid chromatography (LC), or nuclear magnetic resonance spectroscopy (NMR).

### [Separator]

In some embodiments, the secondary battery further includes a separator. There is no particular limitation on the type of the separator in the present application. The separator may be any known porous separator with good chemical and mechanical stability.

In some embodiments, the separator may be made of a material selected from at least one of glass fibers, a non-woven fabric, polyethylene, polypropylene, and polyvinylidene fluoride. The separator may be a single-layer thin film or a multi-layer composite thin film without special limitations. When the separator is a multi-layer composite thin film, materials of various layers may be the same or different without special restrictions.

In some embodiments, the positive electrode plate, the negative electrode plate, and the separator may be manufactured into an electrode assembly through a winding process or a stacking process.

In some embodiments, the secondary battery may include an outer package. The outer package may be used for packaging the foregoing electrode assembly and electrolyte.

In some embodiments, the outer package of the secondary battery may be a hard housing, such as a hard plastic housing, an aluminum housing, or a steel housing. The outer package of the secondary battery may alternatively be a soft bag, such as a pocket type soft bag. The soft bag may be made of plastic, which may be polypropylene, polybutylene terephthalate, poly(butylene succinate), and the like.

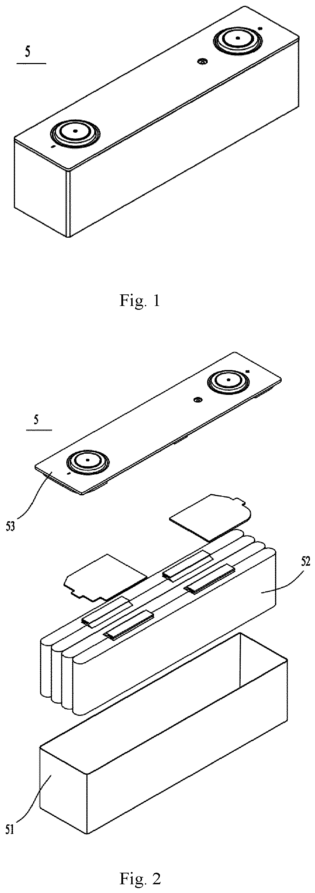

The present application does not have particular limitation to the shape of the secondary battery. The secondary battery may be cylindrical, square, or in other arbitrary shape. Fig. 1 shows a secondary battery 5 with a square structure as an example.

In some embodiments, as shown in Fig. 1 and Fig. 2, the outer package may include a housing 51 and a cover plate 53. The housing 51 may include a bottom plate and side plates connected to the bottom plate, and the bottom plate and the side plates enclose an accommodating cavity. The housing 51 has an opening in communication with the accommodating cavity, and the cover plate 53 is used to close the opening to seal the accommodating cavity. The positive electrode plate, the negative electrode plate, and the separator may be wound or laminated to form an electrode assembly 52. The electrode assembly 52 is packaged in the accommodating cavity. The electrolytic solution infiltrates the electrode assembly 52. The secondary battery 5 includes one or more electrode assemblies 52, which may be adjusted according to requirements.

A manufacturing method for the secondary battery in the present application is well-known. In some embodiments, the positive electrode plate, the separator, the negative electrode plate, and the electrolytic solution may be assembled to form the secondary battery. As an example, the positive electrode plate, the separator, and the negative electrode plate may form an electrode assembly through a winding or laminating process, the electrode assembly is placed in an outer package and dried, then the electrolytic solution is injected, followed by vacuum packaging, standing, formation, shaping, and other processes, thereby obtaining the secondary battery.

In some embodiments of the present application, the secondary battery according to the present application may be assembled into a battery module. The battery module may include a plurality of secondary batteries, and the specific quantity may be adjusted according to the application and capacity of the battery module.

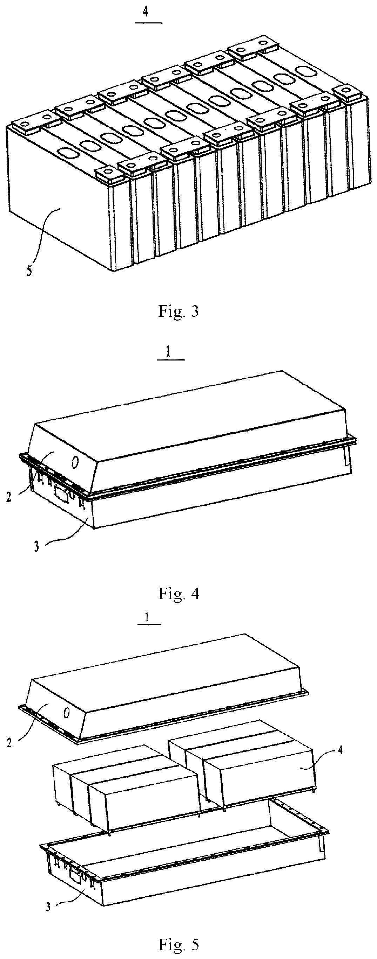

Fig. 3 is a schematic diagram of a battery module 4 as an example. As shown in Fig. 3, in the battery module 4, a plurality of secondary batteries 5 may be arranged in sequence along a length of the battery module 4. Of course, the secondary batteries may alternatively be arranged in any other manner. Further, the plurality of secondary batteries 5 may be fixed by fasteners.

Optionally, the battery module 4 may further include a housing having an accommodating space, and the plurality of secondary batteries 5 are accommodated in the accommodating space.

In some embodiments, the foregoing battery module may alternatively be assembled into a battery pack, and the quantity of the battery module included in the battery pack may be adjusted according to the application and capacity of the battery pack.

Fig. 4 and Fig. 5 are schematic diagrams of a battery pack 1 as an example. As shown in Fig. 4 and Fig. 5, the battery pack 1 may include a battery box and a plurality of battery modules 4 disposed in the battery box. The battery box includes an upper box body 2 and a lower box body 3. The upper box body 2 is used to close the lower box body 3 to form a closed space for accommodating the battery modules 4. A plurality of battery modules 4 may be arranged in the battery box in any manner.

### Electrical device

In a second aspect, the present application provides an electrical device, which includes at least one of the secondary battery, the battery module, and the battery pack of the present application. The secondary battery, the battery module, and the battery pack may be used as a power supply of the electrical device or as an energy storage unit of the electrical device. The electrical device may be, but is not limited to, a mobile device (such as a mobile phone or a notebook computer), an electric vehicle (such as a pure electric vehicle, a hybrid electric vehicle, a plug-in hybrid electric vehicle, an electric bicycle, an electric scooter, an electric golf cart, or an electric truck), an electric train, a ship, a satellite, an energy storage system, or the like.

The electrical device may include the secondary battery, the battery module, or the battery pack according to its usage requirements.

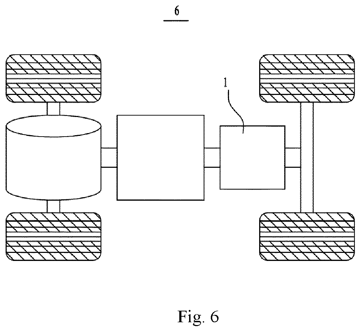

Fig. 6 is a schematic diagram of an electrical device as an example. The electrical device 6 is a pure electric vehicle, a hybrid electric vehicle, a plug-in hybrid electric vehicle, or the like. In order to meet requirements of the electrical device for high power and high energy density, the battery pack 1 or the battery module may be used.

As another example, the electrical device may be a mobile phone, a tablet computer, a notebook computer, or the like. The electrical device is generally required to be thin and light, so the secondary battery may be used as a power supply.

### Examples

The following examples more specifically describe the content disclosed in the present application, and these examples are only used for explanatory description, because various modifications and changes made within the scope of the content disclosed in the present application are apparent to those skilled in the art. Unless otherwise stated, all parts, percentages, and ratios described in the following examples are based on weight, all reagents used in the examples are commercially available or synthesized according to conventional methods and can be directly used without further treatment, and all instruments used in the examples are commercially available.

### Example 1

### 1. Manufacturing of a positive electrode plate

An aluminum foil with a thickness of 12 µm was used as a positive electrode current collector.

A positive electrode active material LiNi_{0.6}Co_{0.2}Mn_{0.2}O₂, a conductive agent carbon black, and polyvinylidene fluoride (PVDF) as a binder were fully mixed at a weight ratio of 97.5:1.4:1.1 in an appropriate amount of solvent NMP to form a uniform positive electrode slurry; and the positive electrode slurry was uniformly applied to a surface of the positive electrode current collector aluminum foil followed by drying and cold pressing to obtain a positive electrode film layer.

A polymer matrix P (VDF-HFP), a boron-containing lithium salt (LiBOB), and a lithium salt LiTFSI were uniformly mixed to form a polymer slurry, the polymer slurry was poured and applied to the positive electrode film layer after vacuum de-foaming, and then it was placed at 5°C-35°C in a humidity environment of 0.1%-30% for 12 h and subjected to phase transfer curing to form a solid electrolyte.

### 2. Manufacturing of a negative electrode plate

A copper foil with a thickness of 8 µm was used as a negative electrode current collector.

A negative electrode active material graphite, styrene butadiene rubber (SBR) as a binder, carboxymethyl cellulose sodium (CMC-Na) as a thickener, and a conductive agent carbon black (Super P) were fully mixed at a weight ratio of 96.2:1.8:1.2:0.8 in an appropriate amount of solvent deionized water to form a uniform negative electrode slurry; and the negative electrode slurry was uniformly applied to a surface of the negative electrode current collector copper foil followed by drying and cold pressing to obtain a negative electrode film layer.

A polymer matrix P (VDF-HFP), a boron-containing lithium salt (LiBF₄), and a lithium salt LiTFSI were de-foamed in vacuum and then applied to the negative electrode film layer, it was placed at 5°C-35°C in a humidity environment of 0.1%-30% for 12 h, and cured to form a solid electrolyte.

### 3. Separator

A porous polyethylene (PE) film was used as the separator.

### 4. Preparation of an electrolytic solution

In an environment with a water content less than 10 ppm, non-aqueous organic solvents including ethylene carbonate, methyl ethyl carbonate, and diethyl carbonate were mixed at a volume ratio of 1:1:1 to obtain an electrolyte solvent. Subsequently, a lithium salt was dissolved in the mixed solvent to prepare the electrolytic solution with a lithium salt concentration of 1 mol/L.

### 5. Manufacturing of a secondary battery

The positive electrode plate, the separator, and the negative electrode plate were laminated in sequence to ensure that the separator was located between the positive electrode plate and the negative electrode plate for separation, and then wound to obtain an electrode assembly; and the electrode assembly was placed in an outer package housing and dried, then the electrolytic solution was injected, followed by vacuum packaging, standing, formation, shaping, and other processes, thereby obtaining a lithium-ion battery.

### Example 2

Secondary batteries in Examples 2-1 to 2-12 were manufactured by a similar method to Example 1, with the difference that the mass percentages of the first additive and the polymer matrix were adjusted in Examples 2-1 to 2-12.

### Comparative Examples 1 and 2

Secondary batteries in Comparative Examples 1 and 2 were manufactured by a similar method to Example 1, with the differences that the mass percentages of the first additive and the polymer matrix were adjusted in Comparative Examples 1 and 2. Data of Example 1, Example 2, and the comparative examples were shown in Table 1.

**Table 1**

| No. | Solid electrolyte | | | | | | B | B/A |
|---|---|---|---|---|---|---|---|---|
| | Polymer matrix | | First additive | | | | | |
| | Type | A% | Boron-containing lithium salt | | Negative electrode film-forming additive | | | |
| | | | Type | B1 | Type | B2 | | |
| Example 1 | P (VDF-HFP) | 5% | LiDFOB | 50% | VC | 45% | 95% | 19.00 |
| Example 2-1 | P (VDF-HFP) | 15% | LiDFOB | 50% | VC | 35% | 85% | 5.67 |
| Example 2-2 | P (VDF-HFP) | 25% | LiDFOB | 50% | VC | 25% | 75% | 3.00 |
| Example 2-3 | P (VDF-HFP) | 30% | LiDFOB | 45% | VC | 20% | 65% | 2.17 |
| Example 2-4 | P (VDF-HFP) | 40% | LiDFOB | 30% | VC | 30% | 60% | 1.50 |
| Example 2-5 | P (VDF-HFP) | 50% | LiDFOB | 30% | VC | 20% | 50% | 1.00 |
| Example 2-6 | P (VDF-HFP) | 70% | LiDFOB | 10% | VC | 20% | 30% | 0.43 |
| Example 2-7 | P (VDF-HFP) | 80% | LiDFOB | 0.1% | VC | 20% | 20% | 0.25 |
| Example 2-8 | P (VDF-HFP) | 55% | LiDFOB | 25% | VC | 20% | 45% | 0.82 |
| Example 2-9 | P (VDF-HFP) | 30% | LiDFOB | 50% | VC | 20% | 70% | 2.33 |
| Example 2-10 | P (VDF-HFP) | 90% | LiDFOB | 10% | VC | 0.1% | 10% | 0.11 |
| Example 2-11 | P (VDF-HFP) | 65% | LiDFOB | 10% | VC | 25% | 35% | 0.54 |
| Example 2-12 | P (VDF-HFP) | 40% | LiDFOB | 10% | VC | 50% | 60% | 1.50 |
| Comparative Example 1 | P (VDF-HFP) | 99.8% | LiDFOB | 0.1% | VC | 0.1% | 0.20% | 0.002 |
| Comparative Example 2 | P (VDF-HFP) | 99.9% | LiDFOB | 0.01% | VC | 0.1% | 0.11% | 0.001 |

### Example 3

Secondary batteries in Examples 3-1 to 3-5 were manufactured by a similar method to Example 1, with the differences that the mass percentage B1% of the boron-containing lithium salt was adjusted in Examples 3-1 to 3-5. Data of Example 1 and Example 3 were shown in Table 2.

**Table 2**

| No. | Solid electrolyte | | | | | | B | B1/B2 | B/A |
|---|---|---|---|---|---|---|---|---|---|
| | Polymer matrix | | First additive | | | | | | |
| | Type | A% | Boron-containing lithium salt | | Negative electrode film-forming additive | | | | |
| | | | Type | B1 | Type | B2 | | | |
| Example 1 | P (VDF-HFP) | 50% | LiDFOB | 0.1% | VC | 50% | 50.1% | 0.002 | 1.00 |
| Example 3-1 | P (VDF-HFP) | 69% | LiDFOB | 1% | VC | 30% | 31.0% | 0.03 | 0.45 |
| Example 3-2 | P (VDF-HFP) | 75% | LiDFOB | 5% | VC | 20% | 25.0% | 0.25 | 0.33 |
| Example 3-3 | P (VDF-HFP) | 80% | LiDFOB | 10% | VC | 10% | 20.0% | 1.00 | 0.25 |
| Example 3-4 | P (VDF-HFP) | 65% | LiDFOB | 30% | VC | 5% | 35.0% | 6.00 | 0.54 |
| Example 3-5 | P (VDF-HFP) | 45% | LiDFOB | 50% | VC | 5% | 55.0% | 10.00 | 1.22 |

### Example 4

Secondary batteries in Examples 4-1 to 4-7 were manufactured by a similar method to Example 1, with the differences that the mass percentage D1% of the electrolytic solution film-forming additive was adjusted in Examples 4-1 to 4-7. Data of Example 1 and Example 4 were shown in Table 3.

**Table 3**

| No. | Electrolytic solution | | | | | E/(D1+D2) |
|---|---|---|---|---|---|---|
| | Electrolytic solution film-forming additive | | Lithium salt | | Viscosity E mPa·s | |
| | Type | D1% | Type | D2% | | |
| Example 1 | FEC | 0.001 | LiPF6 | 0.15 | 4.16 | 0.28 |
| Example 4-1 | FEC | 0.010 | LiPF6 | 0.15 | 4.51 | 0.28 |
| Example 4-2 | FEC | 0.020 | LiPF6 | 0.15 | 4.58 | 0.27 |
| Example 4-3 | FEC | 0.030 | LiPF6 | 0.15 | 4.72 | 0.26 |
| Example 4-4 | FEC | 0.050 | LiPF6 | 0.15 | 4.78 | 0.24 |
| Example 4-5 | FEC | 0.100 | LiPF6 | 0.15 | 4.99 | 0.20 |
| Example 4-6 | FEC | 0.001 | LiPF6 | 0.01 | 3.25 | 2.95 |
| Example 4-7 | FEC | 0.001 | LiPF6 | 0.25 | 6.51 | 0.26 |

### Example 5

Secondary batteries in Examples 5-1 to 5-8 were manufactured by a similar method to Example 1. Unlike Example 1, the compaction density P1 and other parameters of the positive electrode film layer were adjusted in Examples 5-1 to 5-8. Data of Example 1 and Example 5 were shown in Table 4.

**Table 4**

| No. | Positive electrode film layer | | | Percentage of solution solid mass and liquid mass of solid electrolyte | h1* P1/m |
|---|---|---|---|---|---|
| | Type of positive electrode active material | Compaction density P1 g/cm³ | Thickness h1 µm | | |
| Example 1 | LiNi0.6Co0.2Mn0.2O2 | 0.1 | 300 | 2 | 15 |
| Example 5-1 | LiNi0.6Co0.2Mn0.2O3 | 0.5 | 270 | 2 | 67.5 |
| Example 5-2 | LiNi0.6Co0.2Mn0.2O4 | 1 | 250 | 2 | 125 |
| Example 5-3 | LiNi0.6Co0.2Mn0.2O5 | 2 | 200 | 2 | 200 |
| Example 5-4 | LiNi0.6Co0.2Mn0.2O6 | 3 | 150 | 2 | 225 |
| Example 5-5 | LiNi0.6Co0.2Mn0.2O7 | 3.5 | 120 | 2 | 210 |
| Example 5-6 | LiNi0.6Co0.2Mn0.2O8 | 4.5 | 100 | 2 | 225 |
| Example 5-7 | LiNi0.6Co0.2Mn0.2O9 | 5 | 50 | 2 | 125 |
| Example 5-8 | LiNi0.6Co0.2Mn0.2O10 | 5 | 50 | 1 | 250 |

### Example 6

Secondary batteries in Examples 6-1 to 6-6 were manufactured by a similar method to Example 1. Unlike Example 1, the compaction density P2 and other parameters of the negative electrode film layer were adjusted in Examples 6-1 to 6-6. Data of Example 6-1 to Example 6-6 were shown in Table 5.

**Table 5**

| Item | Negative electrode film layer | | | Ratio of solution solid mass and liquid mass of solid electrolyte on a percentage basis | H2* P2/m |
|---|---|---|---|---|---|
| | Type of negative electrode active material | Compaction density P2 g/cm³ | Thickness h2 µm | | |
| Example 1 | Artificial graphite | 1 | 125 | 5% | 25 |
| Example 6-1 | Artificial graphite | 1.5 | 134 | 5% | 40.2 |
| Example 6-2 | Artificial graphite | 2 | 182 | 5% | 72.8 |
| Example 6-3 | Artificial graphite | 2.5 | 207 | 5% | 103.5 |
| Example 6-4 | Artificial graphite | 3 | 220 | 5% | 132 |
| Example 6-5 | Artificial graphite | 4 | 230 | 5% | 184 |
| Example 6-6 | Artificial graphite | 5 | 245 | 5% | 245 |

### Test section

### 1. Parameter test of positive/negative electrode plates

### 1.1 Thickness test of positive/negative electrode film layers

Thicknesses of the positive electrode plate in at least 12 different positions were measured with a high-quality micrometer in the thickness direction of the positive electrode plate, and then an average value was used as the thickness h1 of the positive electrode plate from which the thickness of the positive electrode current collector was subtracted to obtain a thickness of the positive electrode film layer.

Thicknesses of the negative electrode plate in at least 12 different positions were measured with the micrometer in the thickness direction of the negative electrode plate, and then an average value was used as the thickness h2 of the negative electrode plate from which the thickness of the negative electrode current collector was subtracted to obtain a thickness of the negative electrode film layer.

### 1.2 Test of compaction density P of positive/negative electrode film layers

A certain amount of negative electrode active material sample prepared above was taken and added to a mold with a bottom area of 1.327 cm² in a UTM7305 electronic pressure tester, pressure was applied to 2000 kg (equivalent to 20000 N), held for 30 s, and then released. The sample was held for 10 s, and the powder compaction density of the negative electrode active material under the force of 20000 N was recorded and calculated. The testing standard was in accordance with GB/T24533-2009.

A certain amount of positive electrode active material sample prepared above was taken and added to the mold with the bottom area of 1.327 cm² in the UTM7305 electronic pressure tester, pressure was applied to 2000 kg (equivalent to 20000 N), held for 30 s, and then released. The sample was held for 10 s, and the powder compaction density of the positive electrode active material under the force of 20000 N was recorded and calculated. The testing standard was in accordance with GB/T24533-2009.

### 2. Viscosity test of electrolytic solution

An appropriate amount of electrolytic solution sample was first taken to rinse a sample cup and a rotor, then an appropriate amount of electrolytic solution was poured into the sample cup and held at a constant temperature of 25°C. A DV-2TLV viscometer (a calculation formula: FSR = TK * SMC * 10000/ RPM) was used in which a 18 # rotor was chosen for an electrolytic solution and the organic solvent at a speed of 70 r/min, and a Multi Point Average data collection mode was selected to start automatic detection and recording. The testing standard was in accordance with GB/T 10247-2008.

### 3. Performance test of the secondary battery

### 3.1 Cycle performance test of the secondary battery

### (1) Normal-temperature cycle performance test of the secondary battery

At 25°C, the secondary battery was charged with a constant current of 1 C to 4.4 V and continuously charged by the constant voltage until the current was 0.05 C, then the secondary battery was in a fully charged state, at which the charge capacity was recorded as the charge capacity at the 1^{st} cycle. The secondary battery was allowed to stand for 5 min and then discharged by a constant current of 1 C to 2.8V, at which the discharge capacity was recorded as the discharge capacity at the 1^{st} cycle. This was a charging and discharging cycle. The secondary battery was subjected to the above charging and discharging cycle according to the above method, and the discharge capacity after each cycle was recorded. Capacity retention rate (%) of the secondary battery at 25 °C for 600 cycles = discharge capacity at the 600^{th} cycle / discharge capacity at the 1^{st} cycle × 100%.

### 3.2 Safety performance test of the secondary battery

At 25°C, the secondary battery was charged with a constant current of 1 C to 4.3 V and continuously charged by the constant voltage until the current was 0.05 C, at which the secondary battery was in a fully charged state. The fully charged secondary battery was placed in a well-sealed high-temperature box, heated to 100°C at 5°C/min, held for 1 hour, then heated to 105°C at 5°C/min, and held for 30 minutes; and the secondary battery was held for 30 min after every heating by 5°C at the rate of 5°C/min until the secondary battery failed. A maximum temperature Tₘₐₓ before the secondary battery failed was recorded. The higher the Tₘₐₓ, the better the hot box safety performance of the secondary battery is.

To ensure reliability of the test results, at least 3 parallel samples may be used for each of the above tests and an average value was taken as the test result.

### 3.3 Direct current resistance (DCR) test of a secondary battery core

25°C DCR test: A capacity was tested first. A specific operation process was as follows: a constant current charging and discharging tester was used, the secondary battery was allowed to stand for 2 h at 25°C, charged at a rate of 0.33 C to 4.4 V, then charged by the constant voltage until the current was less than 0.05 C, allowed to stand for 5 min, and discharged to 2.8 V, at which the discharge capacity was recorded as an initial capacity of the secondary battery. The remaining power of the battery (in SOC that was expressed by a formula of (remaining power/initial power) × 100%) was then adjusted. DCR was tested as follows: the battery was fully charged with 0.33 C to 4.4 V, charged by the constant voltage of 4.4 V until the current was less than 0.05 C, then fully discharged at 0.05 C for 1 h, and discharged at the constant current until the secondary battery was adjusted to 50% SOC, at which the voltage of the secondary battery was recorded as Ui. The secondary battery was discharged at constant current Ii of 4 C for 30 seconds and sampled at every 0.1 second, and the voltage at the end of discharge was recorded as U₂. Initial direct-current internal resistance of the secondary battery was represented by the discharge direct-current internal resistance at 50% SOC. The initial direct-current internal resistance of the secondary battery (mS2) was (U₁-U₂)/I₁.

### Test results

The cycle performance, safety performance, and dynamics performance of the secondary battery were improved as shown in Tables 6 to 10.

**Table 6**

| No. | Capacity retention rate at 25°C for 600 cycles (%) | Tₘₐₓ (°C) | 25°C DCR (mΩ) |
|---|---|---|---|
| Example 1 | 88.51% | 134 | 22 |
| Example 2-1 | 89.44% | 138 | 24 |
| Example 2-2 | 88.82% | 142 | 25 |
| Example 2-3 | 85.63% | 144 | 27 |
| Example 2-4 | 81.23% | 147 | 32 |
| Example 2-5 | 80.24% | 151 | 35 |
| Example 2-6 | 78.30% | 153 | 37 |
| Example 2-7 | 77.52% | 155 | 38 |
| Example 2-8 | 79.56% | 152 | 36 |
| Example 2-9 | 85.50% | 145 | 25 |
| Example 2-10 | 76.43% | 158 | 42 |
| Example 2-11 | 79.32% | 152 | 39 |
| Example 2-12 | 80.25% | 145 | 31 |
| Comparative Example 1 | 72.47% | 165 | 48 |
| Comparative Example 2 | 71.45% | 168 | 51 |

From Table 6, the attachment of the solid electrolyte to the electrode plate can improve safety performance of the secondary battery. However, from Comparative Examples 1 and 2, it can be seen that the interface transport dynamics of lithium ions were poor and the interface resistance was high. In Examples 1 to 2-12, the mass percentage of the polymer matrix and the first additive in the solid electrolyte was adjusted within an appropriate range, such as 0.1 ≤ B/A ≤ 19; optionally, 0.5 ≤ B/A ≤ 10; which can significantly improve the resistance of the secondary battery to enhance its dynamics performance; and the cycle performance and safety performance of the secondary battery can also be improved.

**Table 7**

| No. | Capacity retention rate at 25°C for 600 cycles (%) | Tₘₐₓ (°C) | 25°C DCR (mΩ) |
|---|---|---|---|
| Example 1 | 80.04% | 148 | 34 |
| Example 3-1 | 79.45% | 152 | 36 |
| Example 3-2 | 78.25% | 154 | 39 |
| Example 3-3 | 77.55% | 156 | 40 |
| Example 3-4 | 79.89% | 150 | 35 |
| Example 3-5 | 83.43% | 143 | 32 |

It can be seen from Table 7, the performance of the secondary battery can be controlled by adjusting the ratio of the mass percentages of the boron-containing lithium salt to the negative electrode film-forming additive in the first additive. Especially when 0.002 ≤ B1/B2 ≤ 10, the cycle performance and dynamics performance of the secondary battery can be significantly improved.

**Table 8**

| No. | Capacity retention rate at 25°C for 600 cycles (%) | Tₘₐₓ (°C) | 25°C DCR (mΩ) |
|---|---|---|---|
| Example 1 | 76.53% | 156 | 44 |
| Example 4-1 | 75.23% | 152 | 48 |
| Example 4-2 | 74.41% | 153 | 52 |
| Example 4-3 | 73.37% | 155 | 55 |
| Example 4-4 | 73.09% | 154 | 58 |
| Example 4-5 | 72.52% | 152 | 64 |
| Example 4-6 | 83.24% | 148 | 589 |
| Example 4-7 | 64.87% | 158 | 89 |

It can be seen from Table 8, the performance of the secondary battery can be controlled by adjusting the relationship between the mass percentage of the electrolytic solution film-forming additive and the lithium salt in the electrolytic solution and the viscosity of the electrolytic solution. Especially when 0.2 ≤ E/(D1+D2) ≤ 2.95, the cycle performance and dynamics performance of the secondary battery can be significantly improved.

**Table 9**

| No. | Capacity retention rate at 25°C after 600 cycles (%) | Tₘₐₓ (°C) | 25°C DCR (mΩ) |
|---|---|---|---|
| Example 1 | 78.23% | 145 | 57 |
| Example 5-1 | 79.19% | 148 | 51 |
| Example 5-2 | 82.27% | 149 | 45 |
| Example 5-3 | 82.29% | 151 | 44 |
| Example 5-4 | 83.76% | 154 | 38 |
| Example 5-5 | 83.86% | 155 | 35 |
| Example 5-6 | 83.95% | 156 | 32 |
| Example 5-7 | 84.10% | 159 | 25 |
| Example 5-8 | 84.24% | 159 | 23 |

It can be seen from Table 9, the performance of the secondary battery can be controlled by adjusting the relationship between the positive electrode film layer and the solid electrolyte and adjusting the protective strength of the solid electrolyte on the positive electrode film layer; especially when 5 ≤ h1 * P1/m ≤ 250, optionally, 70 ≤ h1 * P1/m ≤ 250, the cycle performance and dynamics performance of the secondary battery can be significantly improved.

**Table 10**

| Item | Capacity retention rate at 25°C for 600 cycles (%) | Tₘₐₓ (°C) | 25°C DCR (mΩ) |
|---|---|---|---|
| Example 1 | 88.85% | 143 | 28 |
| Example 6-1 | 87.63% | 144 | 32 |
| Example 6-2 | 87.27% | 142 | 35 |
| Example 6-3 | 87.12% | 143 | 37 |
| Example 6-4 | 86.96% | 145 | 39 |
| Example 6-5 | 86.59% | 146 | 42 |
| Example 6-6 | 86.18% | 148 | 44 |

It can be seen from Table 10, the performance of the secondary battery can be controlled by adjusting the relationship between the negative electrode film layer and the solid electrolyte and adjusting the protective strength of the solid electrolyte on the negative electrode film layer; especially when 5 ≤ h1 * P1/m ≤ 250, optionally 25 ≤ h2 * P2/m ≤ 245, the cycle performance and dynamics performance of the secondary battery can be significantly improved.

Although the present application is described with reference to the preferred embodiments, various improvements can be made and equivalents can be substituted for components therein without departing from the scope of the present application. In particular, as long as there is no structural conflict, various technical features mentioned in the embodiments may be combined in any manner. The present application is not limited to the specific embodiments disclosed herein, but includes all technical solutions falling within the scope of the claims.

## Claims

1. A secondary battery, comprising:
a positive electrode plate comprising a positive electrode film layer;
a negative electrode plate comprising a negative electrode film layer;
an electrolytic solution; and
a solid electrolyte disposed on a surface of the positive electrode film layer and/or the negative electrode film layer, the solid electrolyte comprising a polymer matrix and a first additive, and the first additive being configured to form an interface film on the surface of the positive electrode film layer and/or the negative electrode film layer, wherein
a mass percentage of the polymer matrix relative to a total mass of the solid electrolyte is denoted as A%;
a mass percentage of the first additive relative to the total mass of the solid electrolyte is denoted as B%, and
the secondary battery satisfies: 0.1 ≤ B/A ≤ 19; and optionally, 0.5 ≤ B/A ≤ 10.

2. The secondary battery according to claim 1, wherein
the secondary battery satisfies: 5 ≤ A ≤ 99; and/or 0.1 ≤ B ≤ 95.

3. The secondary battery according to claim 1 or 2, wherein the first additive comprises:
a boron-containing lithium salt, a mass percentage of which relative to the total mass of the solid electrolyte is denoted as B1%; and
a negative electrode film-forming additive, a mass percentage of which relative to the total mass of the solid electrolyte is denoted as B2%, wherein
the secondary battery satisfies: 0.002 ≤ B1/B2 ≤ 10.

4. The secondary battery according to claim 3, wherein
the secondary battery satisfies: 0.1 ≤ B1 ≤ 50; and/or 0.1 ≤ B2 ≤ 50.

5. The secondary battery according to claim 3 or 4, wherein
the boron-containing lithium salt has a molecular formula of LiBFₐO_{b}C_{c}P_{d}, wherein 0 ≤ a ≤ 4, 0 ≤ b ≤ 8, 0 ≤ c ≤ 4, and 0 ≤ d ≤ 4; and
optionally, the boron-containing lithium salt comprises one or more of lithium tetrafluoroborate LiBF₄, lithium bisoxalate borate LiBOB, and lithium difluorooxalate borate LiDFOB.

6. The secondary battery according to any one of claims 3 to 5, wherein
the negative electrode film-forming additive comprises one or more of a carbonate additive, a sulfate additive, and a sulfite additive.

7. The secondary battery according to claim 6, wherein
the carbonate additive comprises a cyclic carbonate solvent and/or a linear carbonate solvent; optionally, the cyclic carbonate solvent comprises one or more of vinylidene carbonate VC, fluoroethylene carbonate FEC, difluoroethylene carbonate DFEC, vinyl ethylene carbonate VEC, and dicaprylyl carbonate CC; the linear carbonate solvent comprises one or more of allyl ethyl carbonate AEC, diphenyl carbonate DPC, methyl allyl carbonate MAC, and polycarbonate VA; and/or
the sulfate additive comprises a cyclic sulfonate additive and/or an hydrocarbyl sulfate additive; optionally, the cyclic sulfonate additive comprises one or more of 1,3-propane sultone PS, propene sultone PES, and 3-fluoro-1,3-propane sultone FPS; and/or the hydrocarbyl sulfate additive comprises one or more of ethylene sulfate DTD, diethyl sulfate DES, and dimethyl sulfate DMS; and/or
the sulfite additive comprises ethylene sulfite ES and/or vinyl ethylene sulfite VES.

8. The secondary battery according to any one of claims 1 to 7, wherein the electrolytic solution comprises:
a cyclic carbonate solvent, a mass percentage of which relative to a total mass of the electrolytic solution is denoted as M1%; and
a linear carbonate solvent, a mass percentage of which relative to the total mass of the electrolytic solution is denoted as M2%, wherein
the secondary battery satisfies: 10⁻³ ≤ M1/M2 ≤ 2, and optionally, 0.1 ≤ M1/M2 ≤ 1; and
optionally, 1 ≤ M1 ≤ 20; and/or 50 ≤ M2 ≤ 85.

9. The secondary battery according to claim 8, wherein
the cyclic carbonate solvent comprises one or more of ethylene carbonate EC, propylene carbonate PC, vinylidene carbonate VC, fluoroethylene carbonate FEC, difluoroethylene carbonate DFEC, vinyl ethylene carbonate VEC, and dicaprylyl carbonate CC; and/or
the linear carbonate solvent comprises one or more of allyl ethyl carbonate AEC, diphenyl carbonate DPC, methyl allyl carbonate MAC, polycarbonate VA, diethyl carbonate DEC, ethyl methyl carbonate EMC, methyl propyl carbonate MPC, ethyl propyl carbonate EPC, methyl butyl carbonate MBC, methyl acetate MA, ethyl acetate EA, methyl propionate MP, and ethyl propionate EP.

10. The secondary battery according to any one of claims 1 to 9, wherein the electrolytic solution comprises:
an electrolytic solution film-forming additive, a mass percentage of which based on the total mass of the electrolytic solution is denoted as D1%; and
a lithium salt, a mass percentage of which based on the total mass of the electrolytic solution is denoted as D2%, wherein
the secondary battery satisfies: 0.2 ≤ E/(D1+D2) ≤ 2.95, wherein E represents a viscosity of the electrolytic solution, in mPa·s.

11. The secondary battery according to any one of claims 1 to 10, wherein
a ratio of solution solid mass and liquid mass of the solid electrolyte on a percentage basis is denoted as m;
a compaction density of the positive electrode film layer is denoted as P1 g/cm³;
a thickness of the positive electrode film layer is denoted as h1 µm; and
the secondary battery satisfies: 5 ≤ h1 * P1/m ≤ 250.

12. The secondary battery according to any one of claims 1 to 11, wherein
a ratio of solution solid mass and liquid mass of the solid electrolyte on a percentage basis is denoted as m;
a compaction density of the negative electrode film layer is denoted as P2 g/cm³;
a thickness of the negative electrode film layer is denoted as h2 µm; and
the secondary battery satisfies: 25 ≤ h2 * P2/m ≤ 245.

13. A battery module, comprising the secondary battery according to any one of claims 1 to 12.

14. A battery pack, comprising the battery module according to claim 13.

15. An electrical device, comprising the secondary battery according to any one of claims 1 to 12, the battery module according to claim 13, or the battery pack according to claim 14.
